# EUROPÄISCHE PATENTSCHRIFT

(11) **EP 1 404 990 B1**
(45) Veröffentlichungstag und Bekanntmachung des Hinweises auf die Patenterteilung: **27.10.2004**
(21) Anmeldenummer: 02764644.7
(22) Anmeldetag: 06.07.2002
(51) Int. Cl.: F16H 57/04, B60T 1/08

(54) **ANSCHLUSS EINER GETRIEBEKÜHLUNG AN DEN KÜHLKREISLAUF EINES MOTORS**
CONNECTION OF A GEARBOX COOLING TO THE COOLING CIRCUIT OF AN ENGINE
RACCORDEMENT D'UN SYSTEME DE REFROIDISSEMENT DE BOITE DE VITESSES AU CIRCUIT DE REFROIDISSEMENT D'UN MOTEUR

(30) Priorität: 12.07.2001 DE 10134042
(43) Veröffentlichungstag der Anmeldung: 07.04.2004
(73) Patentinhaber: ZF FRIEDRICHSHAFEN Aktiengesellschaft, 88038 Friedrichshafen (DE)
(72) Erfinder: RONGE, Ludger, 88097 Eriskirch (DE)
(86) Internationale Anmeldenummer: PCT/EP2002/007556
(87) Internationale Veröffentlichungsnummer: WO 2003/006850

(56) Entgegenhaltungen:
- EP-A- 0 716 966
- EP-A- 0 990 820
- PATENT ABSTRACTS OF JAPAN vol. 1997, no. 01, 31. Januar 1997 (1997-01-31) & JP 08 247263 A (HINO MOTORS LTD), 24. September 1996 (1996-09-24)

## Beschreibung

Die Erfindung betrifft ein Fahrzeuggetriebe nach dem Oberbegriff des Anspruchs 1.

Bei der Kühlung eines Fahrzeuggetriebes und insbesondere bei der Kühlung einer mit einem Getriebe verbundenen Dauerbremseinrichtung, wie beispielsweise eines hydrodynamischen Retarders bzw. eines mit dem Getriebegehäuse integrierten Intarders, muss die beim Bremsvorgang erzeugte Wärme abgeführt werden. Derzeit werden noch Wärmetauscher verwendet, die die im Retarder erzeugte Wärme an die Umgebungsluft abgeben. Auch eine Einbindung des Retarders in das Fahrzeugkühlsystem wurde bereits angedacht. Der Wärmetauscher kann dabei in einem separaten Bauteil am Getriebe angeordnet sein, oder auch in das Getriebegehäuse integriert sein, in dem Rohre in das Gehäuse verlegt werden oder das Gehäuse mehrwandig ausgebildet wird. Aus der gattungsgemäßen DE 19625357 ist ein im Getriebegehäuse integrierter Wärmetauscher bekannt, der aber nicht mit dem Fahrzeugkühlkreislauf verbunden ist. Soll die Kühlung des Getriebes bzw. des Retarders in den Kühlkreislauf des Fahrzeugs eingebunden sein, muss eine Verbindung zwischen Getriebe und Motor hergestellt werden. Heutige Systeme weisen in der Regel eine Trennung zwischen beiden Kühlsystemen auf.

Weiterhin ist in der EP-A-990 820 eine Motor-Getriebe-Anordnung beschrieben für Traktionsantriebe von Schienenfahrzeugen mit einer elektrischen Maschine, wobei Kühlkanäle im Getriebegehause mit Kühlkanälen im Motorgehäuse verbunden sind. Ein Fahrzeuggetriebe und -Motor im Sinne der Erfindung mit Kupplungsglocke liegt nicht vor.

Der Erfindung liegt die Aufgabe zugrunde, eine Verbindung zwischen dem Kühlsystem eines Getriebes bzw. Retarders und dem Fahrzeug aufzuzeigen.

Die Aufgabe wird gelöst mit einem Fahrzeuggetriebe mit den Merkmalen des Anspruchs 1. Ausgestaltungen sind Gegenstand von Unteransprüchen.

An einem Fahrzeuggetriebe, das ein Getriebegehäuse, eine Kupplungsglocke und Leitungen für ein flüssiges Kühlmedium umfasst, und das an einer Verbindungsstelle mit einem Fahrzeugmotor verbunden ist, sind im Bereich der Verbindungsstelle an der Kupplungsglocke zwei erste Kupplungsflansche vorgesehen und ebenfalls im Bereich der Verbindungsstelle an dem Fahrzeugmotor zwei zweite Kupplungsflansche vorgesehen, die mit den ersten Kupplungsflanschen zusammenschließbar sind zur Übertragung des Kühlmediums zwischen Fahrzeugmotor und Fahrzeuggetriebe. Diese Kupplungsflansche können einen Standardanschlussflansch bilden. Über diese Flansche fließt das Fahrzeugkühlmedium einerseits kühl zum Getriebe bzw. Retarder hin und andererseits warm wieder vom Getriebe bzw. Retarder in den Fahrzeugkühlkreislauf und den großen Fahrzeugwärmetauscher (Kühler) zurück. Zusätzliche Rohrleitungen, die Bauraum im Fahrzeug beanspruchen und eine Gefahr der Beschädigung, beispielsweise bei Wartungsarbeiten, beinhalten, können vermieden werden, weil nur noch kurze Verbindungsflansche notwendig ist. In einer Ausgestaltung sind die ersten und die zweiten Flansche innerhalb der Kupplungsglocke angeordnet und in einer weiteren Ausgestaltung sind die ersten und die zweiten Flansche im Außenumfangsbereich der Kupplungsglocke angeordnet. An einer vorteilhaften Ausführungsform fließt das Kühlmedium von den ersten Flanschen an der Kupplungsglocke direkt in ein doppelwandiges Getriebegehäuse oder Rohre im Gehäuse des Getriebes. Bei einer anderen vorteilhafte Ausführungsform fließt das Kühlmedium von den ersten Flanschen an der Kupplungsglocke durch extern am Getriebegehäuse angeordnete Rohrleitungen zum Retarder. In einer Ausgestaltung ist am oder im Getriebegehäuse ein Wärmetauscher vorgesehen, der einerseits die vom Retarder erzeugte Wärme aufnimmt und andererseits an das Fahrzeugkühlsystem angeschlossen ist und die Wärme dorthin abgibt. Bei eine Ausführungsform ist das übertragene Kühlmedium das Kühlmedium des Retarders, bei einer Ausführung ist das Kühlmedium das Arbeitsmedium des Retarders. Bei Verwendung eines Retarders mit Wasser als Arbeitsmedium ist das Fahrzeugkühlmedium auch das Arbeitsmedium des Retarders. In einer Ausführungsform ist die Kupplungsglocke als separates Bauteil an dem Getriebegehäuse angeschlossen, in einer anderen Ausführung ist die Kupplungsglocke im Getriebegehäuse integriert.

Die Erfindung wird anhand einer Zeichnung näher beschrieben:
Es zeigen:
- Fig. 1: Getriebe mit außenliegenden Rohrleitungen;
- Fig. 2: Getriebe mit teilweise im Gehäuse liegenden Leitungen und
- Fig. 3: Getriebe mit Flanschen innerhalb der Kupplungsglocke.

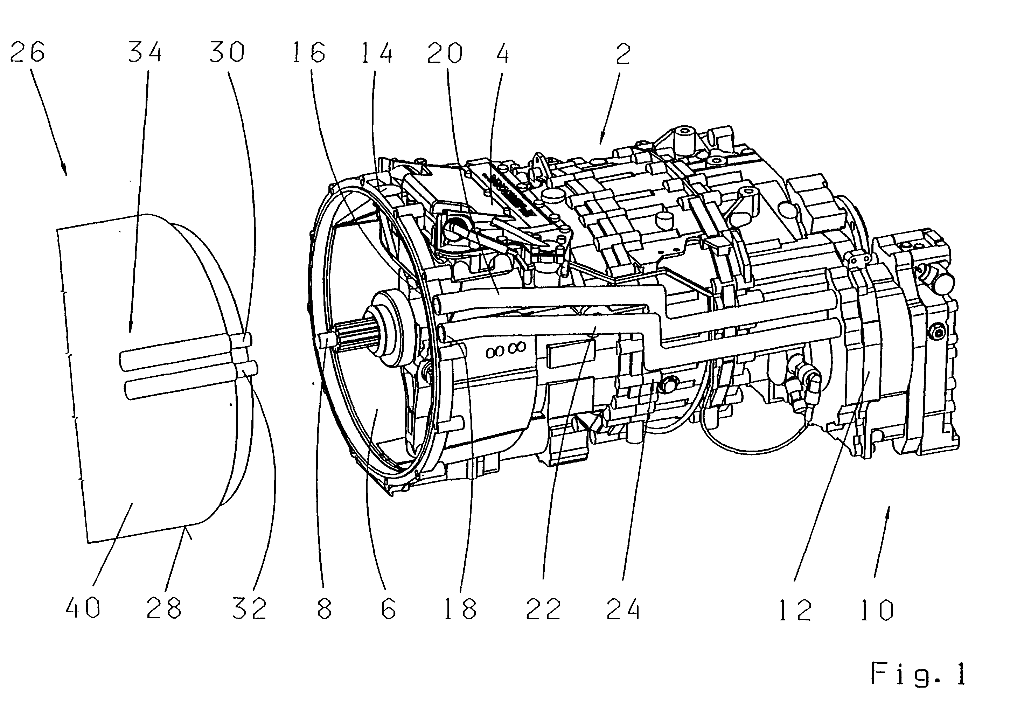

In der Fig. 1 ist ein Getriebegehäuse 4 eines Fahrzeuggetriebes 2 dargestellt, das eine Kupplungsglocke 6 aufweist, in die eine Eingangswelle 8 des Getriebes 2 hineinragt. An das Getriebegehäuse 4 ist ein Retarder 10 angeschlossen, dessen Retardergehäuse 12 mit dem Getriebegehäuse 4 fest verbunden ist. Am äußeren Umfang 14 der Kupplungsglocke 6 sind zwei Kupplungsflansche 16 und 18 vorgesehen, die jeweils mit einer Rohrleitung 20 und 22 verbunden sind. Die Rohrleitungen 20 und 22 sind an der äußeren Oberfläche des Getriebegehäuses 4 verlegt, wobei sie beispielsweise im Bereich 24 einem reduzierten Umfang des Getriebegehäuses 4 nachgeführt werden, und münden schließlich in das Retardergehäuse 12. Die Rohrleitung 20 dient beispielsweise der Zuführung von gekühltem Kühlmedium zum Retarder 10, während die Rohrleitung 22 der Abführung von aufgewährtem Kühlmedium vom Retarder 10 weg dient. Dadurch wird entweder der Retarder10 im Retardergehäuse 12 direkt gekühlt oder, wenn das Kühlmedium gleichzeitig Arbeitsmedium des Retarders 10 ist, wird das Arbeitsmedium direkt zuund abgeführt. An die Kupplungsglocke 6 anschließbar ist der Antriebsmotor 26 eines hier nicht gezeigten Fahrzeuges. Am äußeren Umfang 28 des Motorgehäuses 40 sind zwei Kupplungsflansche 30 und 32 angebracht, die im Bereich 34 in das Motorgehäuse 40 einmünden und dort mit den Leitungen für das Kühlmedium des Motors 26 verbunden sind. An den Öffnungen der Kupplungsflansche 16, 18, 30, 32 sind Dichtungseinrichtungen vorgesehen, die ein dichtes Übertragen eines flüssigen Kühlmediums zwischen Motor 26 und Getriebe 2 ermöglichen.

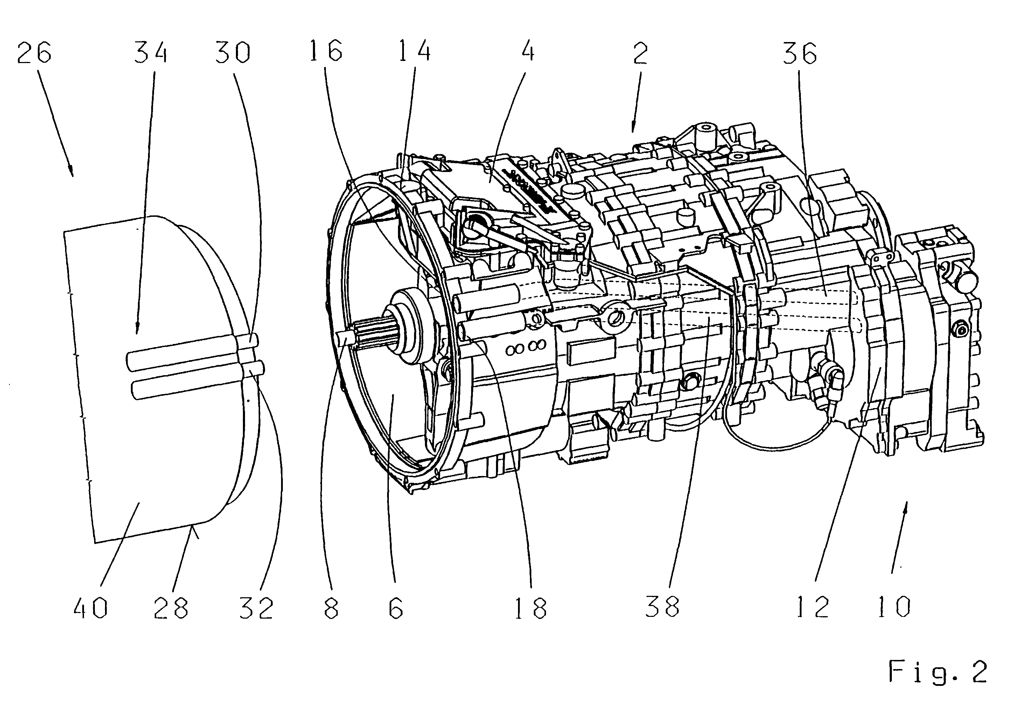

Die Fig. 2 weist gegenüber der Fig. 1 keine außenliegenden Rohrleitungen auf, sondern die Kupplungsflansche 16, 18 münden direkt in das Getriebegehäuse 4 ein und dienen dort beispielsweise zur Zuführung vom Kühlmedium zum Getriebe 2 selbst oder auch zur Hindurchführung von Kühlmedium bzw. Arbeitsmedium zum Retarder 10 durch hier mit Strichlinien dargestellten Rohrleitungen 36, 38 durch ein doppelwandiges Getriebegehäuse.

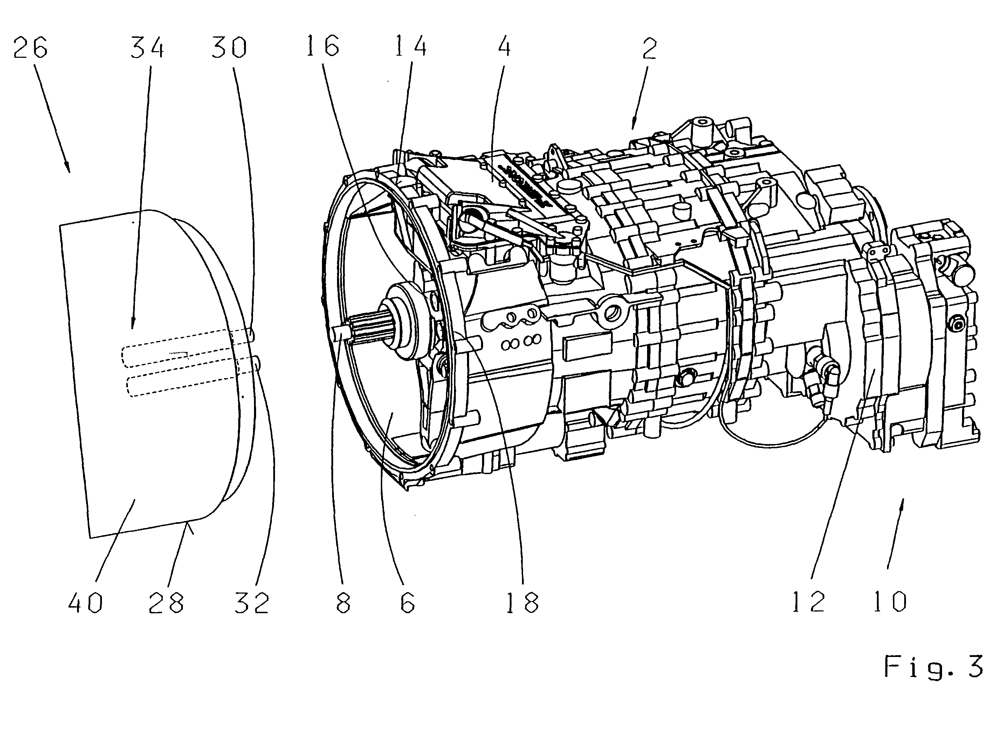

In der Fig. 3 sind die Kupplungsflansche 16, 18, 30 und 32 nach innerhalb der Kupplungsglocke 6 bzw. innerhalb des äußeren Umfangs 14 von Getriebegehäuse 6 und innerhalb des äußeren Umfangs 28 von Motorgehäuse 40 verlegt. Dadurch müssen an der Oberfläche der Gehäuse 4 und 40 keine Maßnahmen vorgenommen werden. Die Kupplungsflansche 30 und 32 sind im Motorgehäuse 40 mit den dortigen Leitungen für das Kühlmedium des Motors 26 verbunden. Im Getriebegehäuse 4 sind die Kupplungsflansche 16 und 18 mit hier nicht sichtbaren Leitungen innerhalb des dann doppelwandigen Getriebegehäuses verbunden, um das Getriebe 2 und/oder den Retarder 10 zu kühlen.

### Bezugszeichen

- 2: Fahrzeuggetriebe
- 4: Getriebegehäuse
- 6: Kupplungsglocke
- 8: Eingangswelle
- 10: Retarder
- 12: Retardergehäuse
- 14: Umfang
- 16: Kupplungsflansch
- 18: Kupplungsflansch
- 20: Rohrleitung
- 22: Rohrleitung
- 24: Bereich
- 26: Antriebsmotor
- 28: Umfang
- 30: Kupplungsflansch
- 32: Kupplungsflansch
- 34: Bereich
- 36: Rohrleitung
- 38: Rohrleitung
- 40: Motorgehäuse

## Patentansprüche

1. Fahrzeuggetriebe (2), das ein Getriebegehäuse (4), eine Kupplungsglocke (6) und Leitungen (20, 22, 36, 38) für ein flüssiges Kühlmedium umfasst, und das an einer Verbindungsstelle mit einem Fahrzeugmotor (26) verbunden ist, **dadurch gekennzeichnet, dass** im Bereich der Verbindungsstelle an der Kupplungsglocke (6) zwei erste Kupplungsflansche (16, 18) vorgesehen sind, die jeweils mit einer der Leitungen verbindbar sind, dass im Bereich der Verbindungsstelle an dem Fahrzeugmotor (6) zwei zweite Kupplungsflansche (30, 32) vorgesehen sind, die mit den ersten Kupplungsflanschen (16, 18) zusammenschließbar sind zur Übertragung des Kühlmediums zwischen Fahrzeugmotor (26) und Fahrzeuggetriebe (2).

2. Fahrzeuggetriebe (2) nach Anspruch 1, **dadurch gekennzeichnet, dass** die ersten Kupplungsflansche (16, 18) und die zweiten Kupplungsflansche (30, 32) innerhalb der Kupplungsglocke (6) angeordnet sind.

3. Fahrzeuggetriebe (2) nach Anspruch 1, **dadurch gekennzeichnet, dass** die ersten Kupplungsflansche (16, 18) und die zweiten Kupplungsflansche (30, 32) am Außenumfang (14) der Kupplungsglocke (6) angeordnet sind.

4. Fahrzeuggetriebe (2) nach einem der Ansprüche 1 bis 3, **dadurch gekennzeichnet, dass** das Kühlmedium von den ersten Kupplungsflanschen (16, 18) an der Kupplungsglocke (6) direkt in ein die Leitungen bildendes doppelwandiges Getriebegehäuse oder in die Leitungen, die als Rohrleitungen (36, 38) im doppelwandigen Gehäuse (4) des Getriebes (2) angeordnet sind, fließt.

5. Fahrzeuggetriebe (2) nach einem der Ansprüche 1 bis 3, **dadurch gekennzeichnet, dass** die Leitungen als extern am Getriebegehäuse angeordnete Rohrleitungen (20, 22) ausgebildet sind.

6. Fahrzeuggetriebe (2) nach einem der Ansprüche 1 bis 5, **dadurch gekennzeichnet, dass** am oder im Getriebegehäuse (4) ein Wärmetauscher vorgesehen ist, der einerseits die erzeugte Wärme aufnimmt und andererseits über die Rohrleitungen (20, 22; 36, 38) und Kupplungsflansche (16, 18, 30, 32) an ein Kühlsystem des Fahrzeugs angeschlossen ist und die Wärme dorthin abgibt.

7. Fahrzeuggetriebe (2) nach einem der Ansprüche 1 bis 6, **dadurch gekennzeichnet, dass** das Kühlmedium das Kühlmedium eines Retarders (10) ist.

8. Fahrzeuggetriebe (2) nach einem der Ansprüche 1 bis 6, **dadurch gekennzeichnet, dass** das Kühlmedium das Arbeitsmedium des Retarders ist

9. Fahrzeuggetriebe (2) nach Anspruch 8, **dadurch gekennzeichnet, dass** bei Verwendung eines Retarders (10) mit Wasser als Arbeitsmedium das Kühlmedium des Fahrzeugs auch Arbeitsmedium des Retarders (10) ist.

10. Fahrzeuggetriebe (2) nach einem der Ansprüche 1 bis 9, **dadurch gekennzeichnet, dass** die Kupplungsglocke (6) als separates Bauteil an dem Getriebegehäuse (4) angeschlossen ist.

11. Fahrzeuggetriebe (2) nach einem der Ansprüche 1 bis 9, **dadurch gekennzeichnet, dass** die Kupplungsglocke (6) im Getriebegehäuse (4) integriert ist.

## Claims

1. Vehicle transmission (2) comprising a transmission housing (4), a clutch bell (6) and lines (20, 22, 36, 38) for a fluid cooling medium, and which at a connection point is linked to a vehicle engine (26), **characterized in that** in the area of the connection point on the clutch bell (6) there are two first clutch flanges (16, 18), each of which can be linked to one of the lines, that in the area of the connection point on the vehicle engine (6) there are two second clutch flanges (30, 32), which can be connected to the first clutch flanges (16, 18) for conveyance of the cooling medium between vehicle engine (26) and vehicle transmission (2).

2. Vehicle transmission (2) according to claim 1, **characterized in that** the first clutch flanges (16, 18) and the second clutch flanges (30, 32) are arranged within the clutch bell (6).

3. Vehicle transmission (2) according to claim 1, **characterized in that** the first clutch flanges (16, 18) and the second clutch flanges (30, 32) are arranged on the outer periphery (14) of the clutch bell (6).

4. Vehicle transmission (2) according to one of the claims 1 through 3, **characterized in that** the cooling medium from the first clutch flanges (16, 18) on the clutch bell (6) flows direct into a double-walled transmission housing, which forms the lines, or into the lines, which are arranged as pipes (36, 38) in the double-walled housing (4) of the transmission (2).

5. Vehicle transmission (2) according to one of the claims 1 through 3, **characterized in that** the lines are designed as pipes (20, 22) arranged on the outside of the transmission housing.

6. Vehicle transmission (2) according to one of the claims 1 through 5, **characterized in that** on or inside the transmission housing (4) there is a heat exchanger, which on the one hand absorbs the heat generated and on the other hand delivers the heat to a cooling system of the vehicle to which it is linked via pipes (20, 22; 36, 38) and clutch flanges (16, 18, 30, 32).

7. Vehicle transmission (2) according to one of the claims 1 through 6, **characterized in that** the cooling medium is that of a retarder (10).

8. Vehicle transmission (2) according to one of the claims 1 through 6, **characterized in that** the cooling medium is the working medium of the retarder.

9. Vehicle transmission (2) according to claim 8, **characterized in that** with the use of a retarder (10) with water as working medium, the cooling medium of the vehicle is also the working medium of the retarder (10).

10. Vehicle transmission (2) according to one of the claims 1 through 9, **characterized in that** the clutch bell (6) is connected to the transmission housing (4) as a separate component.

11. Vehicle transmission (2) according to one of the claims 1 through 9, **characterized in that** the clutch bell (6) is integrated into the transmission housing (4).

## Revendications

1. Transmission de véhicule (2), qui comprend un carter de transmission (4), une cloche d'embrayage (6) et des conduites (20, 22, 36, 38) pour un fluide de refroidissement liquide, et qui est reliée par une jonction à un moteur d'automobile (26), **caractérisée en ce que**, dans la région de la jonction à la cloche d'embrayage (6), sont prévues deux premières brides d'accouplement (16, 18) qui peuvent être reliées chacune à une des conduites, **en ce que**, dans la région de la jonction au moteur d'automobile (26), sont prévues deux secondes brides d'accouplement (30, 32) qui peuvent être raccordées aux premières bride d'accouplement (16, 18) pour transmettre le fluide de refroidissement entre le moteur d'automobile (26) et la transmission de véhicule (2).

2. Transmission de véhicule (2) selon la revendication 1, **caractérisée en ce que** les premières bride d'accouplement (16, 18) et les secondes brides d'accouplement (30, 32), sont disposées à l'intérieur de la cloche d'embrayage (6).

3. Transmission de véhicule (2) selon la revendication 1, **caractérisée en ce que** les premières brides d'accouplement (16, 18) et les secondes brides d'accouplement (30, 32) sont disposées à la périphérie extérieure (14) de la cloche d'embrayage (6).

4. Transmission de véhicule (2) selon l'une des revendications 1 à 3, **caractérisée en ce que** le fluide refroidissement s'écoule directement des premières brides d'accouplement (16, 18) portées par la cloche d'embrayage (6) dans un carter de transmission à double paroi qui forme les conduites ou dans des conduites qui sont disposées sous la forme de conduites tubulaires (36, 38) dans le carter à double paroi (4) de la transmission (2).

5. Transmission de véhicule (2) selon l'une des revendications 1 à 3, **caractérisée en ce que** les conduites sont constituées par des conduites tubulaires (20, 22) portées extérieurement par le carter de transmission.

6. Transmission de véhicule (2) selon l'une des revendications 1 à 5, **caractérisée en ce que**, sur ou dans le carter de transmission (4), est prévu un échangeur de chaleur qui, d'une part, reçoit la chaleur produite et, d'autre part, est raccordé au moyen des conduites tubulaires (20, 22; 36, 38) et des brides d'accouplement (16, 18, 30, 32) à un circuit de refroidissement du véhicule et cède la chaleur à ce dernier.

7. Transmission de véhicule (2) selon l'une des revendications 1 à 6, **caractérisée en ce que** le fluide de refroidissement est le fluide de refroidissement d'un ralentisseur (10).

8. Transmission de véhicule (2) selon l'une des revendications 1 à 6, **caractérisée en ce que** le fluide de refroidissement est le fluide de travail du ralentisseur.

9. Transmission de véhicule (2) selon la revendication 8, **caractérisée en ce que,** dans le cas où l'on utilise un ralentisseur (10) comportant de l'eau comme fluide de refroidissement, le fluide de refroidissement du véhicule est aussi le fluide de travail du ralentisseur (10).

10. Transmission de véhicule (2) selon l'une des revendications 1 à 9, **caractérisée en ce que** la cloche d'embrayage (6) est assemblée au carter de transmission (4) sous la forme d'un élément séparé.

11. Transmission de véhicule (2) selon l'une des revendications 1 à 3, **caractérisée en ce que** la cloche d'embrayage (6) est intégrée dans le carter de transmission (4).
